# EUROPÄISCHE PATENTSCHRIFT

(11) **EP 4 190 419 B1**
(45) Veröffentlichungstag und Bekanntmachung des Hinweises auf die Patenterteilung: **16.07.2025**
(21) Anmeldenummer: 22180550.0
(22) Anmeldetag: 22.06.2022
(51) Int. Cl.: A63F 13/90, A63F 13/235, A63F 13/24, G07F 17/32

(54) **STEUEREINHEIT FÜR EINEN UNTERHALTUNGSAUTOMATEN**
CONTROL UNIT FOR AN ENTERTAINMENT MACHINE
UNITÉ DE COMMANDE POUR UN DISPOSITIF AUTOMATIQUE D'AMUSEMENT

(30) Priorität: 01.12.2021 DE 102021131595
(43) Veröffentlichungstag der Anmeldung: 07.06.2023
(73) Patentinhaber: adp Merkur GmbH, 32339 Espelkamp (DE)
(72) Erfinder: SCHRÖER, Werner, 46399 Bocholt (DE)
(74) Vertreter: Puschmann Borchert Kaiser Klettner Patentanwälte Partnerschaft mbB

(56) Entgegenhaltungen:
- WO-A1-2017/149041
- GB-A- 2 393 133
- US-A1- 2008 287 199

## Beschreibung

Die Erfindung betrifft eine Steuereinheit für einen Unterhaltungsautomaten gemäß der in Patentanspruch 1 angegebenen Art.

Unterhaltungsautomaten sind aus dem Stand der Technik in vielfältiger Weise bekannt. Moderne Unterhaltungsautomaten weisen üblicherweise eine zentrale Steuereinheit auf, über die alle Vorgänge des Unterhaltungsautomaten gesteuert und überwacht werden. Dies betrifft neben den Vorgängen zur Bezahlung der Spiele auch die Steuerung des Spielverlaufs, die Ergebnisermittlung und die Auszahlung bzw. Buchung erzielter Gewinne.

Aus der DE 94 21 089 U1 ist eine Steuereinheit für ein Unterhaltungsspielgeräte mit oder ohne Gewinnmöglichkeit bekannt, die mit einem austauschbaren Speicher-Steckmodul (Spielmodul) versehen ist, in dessen nicht flüchtigen Speichern die Charakteristik des Spielgerätes abgelegt ist. Durch das Spielmodul erhält die Steuereinheit ihr charakteristisches, individuelles Gepräge, sodass die Steuereinheit nur durch die Wahl eines entsprechend ausgestalteten Spielmoduls unterschiedlichen Unterhaltungsspielgeräten angepasst werden kann. Der Datenaustausch zwischen dem Speicher-Steckmodul (Spielmodul) und der Steuereinheit erfolgt mittels Schnittstellen, die je nach Bedarf unterschiedlich ausgeführt sein können.

Eine gattungsgemäße, sämtliche Merkmale des Oberbegriffes des Patentanspruches 1 aufweisende Steuereinheit für ein Unterhaltungsspielgerät, ist in der GB 2 393 133 A offenbart.

WO 2017/149041 A1 offenbart einen Unterhaltungsautomaten mit NFC Funktionalität.

Der Erfindung liegt die Aufgabe zugrunde eine Steuereinheit für ein Unterhaltungsautomaten derart weiterzubilden, dass neben einer kostengünstigen und schnellen Anpassung an geänderte Anforderungen insbesondere auch eine vereinfachte Fehleranalyse ermöglicht ist.

Diese Aufgabe wird durch die Merkmale des Patentanspruches 1 gelöst.

Die Unteransprüche bilden vorteilhafte Weiterbildungen der Erfindung.

Die erfindungsgemäße Steuereinheit zeichnet sich durch ihren modularen Aufbau auf und umfasst neben einem Computer-on-Modul und einem das Computer-on-Modul, nachfolgend verkürzt auch als CoM bezeichnet, tragendes Carrierboard, insbesondere noch ein Connectorboard.

Während sich auf dem CoM in bekannter Art und Weise alle relevanten Funktionseinheiten, wie Zentraleinheit (CPU), Arbeitsspeicher und der Chipsatz befinden, ist das das CoM tragende Carrierboard vorliegend so konfiguriert, dass dieses lediglich die für den Betrieb eines Unterhaltungsautomaten unbedingt notwendigen sonstige Komponenten und Schnittstellen, wie Spannungsversorgung, physikalische Schnittstellen zum Anschluss von Ein- und Ausgabegeräte etc., umfasst. Sonstige für den vorgesehenen Unterhaltungsautomatentyp und dessen Einsatzgebiet abgestimmten, speziellen Komponenten und Schnittstellen, also die automatenspezifischen Schnittstellen, die anwendungsspezifischen Schnittstellen, z.B. ist ein Betrieb in einer Spielbank oder in einer Gaststätte vorgesehen, sowie die länderspezifischen Schnittstellen, z.B. für einen Betrieb in Deutschland oder im Ausland, sind auf das Connectorboard ausgelagert.

Mit anderen Worten, es gibt nur eine "Bestückungsvariante" des das CoM tragenden Carrierboards, das entsprechend nunmehr für alle unterschiedlichen Unterhaltungsautomatentypen verwendet werden kann. Die Anpassung an unterschiedliche Randbedingungen bzw. Anforderungen, wie welcher Art von Unterhaltungsautomat, Einsatz des Automaten in einem Casino außerhalb Deutschlands etc., erfolgt durch die Wahl eines entsprechend konfigurierten Connectorboards.

Diese Ausgestaltung hat den Effekt, dass die Bauteile CoM und Carrierboard nicht nur unverändert bleiben, sondern dass - da das Carrierboard aufgrund des Verzichts der entsprechenden ausgelagerten Komponenten und Schnittstellen nunmehr wesentlich kleiner baut - auch entsprechend kostengünstiger sind. Vorteilhaft ist zudem, dass die Steuereinheit durch den Einbau eines entsprechenden Connectorboards schnell, einfach und kostengünstig an unterschiedliche Anforderungen, Randbedingungen angepasst werden kann. Aufgrund des modularen Aufbaus ist zudem im Falle eines Defektes, beispielsweise defektes Connectorboards, durch einen einfachen Austausch des defekten Connectorboards eine schnelldurchzuführende und kostengünstige Reparatur ermöglicht.

Erfindungsgemäß umfasst die Steuereinheit ferner ein NFC-Tag (= Near Field Communication-), das über einen Datenbus mit dem CoM kommuniziert und das eingerichtet ist, mit Daten, wie z.B. Betriebsstunden, Softwareversion, Fehlermeldungen etc., beschrieben zu werden.

Hierdurch ist in vorteilhafter Weise eine vereinfachte Wartung/Fehlersuche sichergestellt, da nunmehr ein Servicetechniker die auf dem NFC-Tag gespeicherten Daten mittels eines Servicemoduls, insbesondere einem Smartphone, kontaktlos auslesen kann.

Bei der Near Field Communication handelt es sich bekanntlich um einen auf der RFID-Technik basierenden internationalen Übertragungsstandard zum kontaktlosen Austausch von Daten per elektromagnetischer Induktion mittels loser gekoppelter Spulen über kurze Strecken von wenigen Zentimetern und einer Datenübertragungsrate von maximal 424 kBits/s. Bisher kommt diese Technik vor allem im Betrieb kontaktlose Zahlungen kleiner Beträge zum Einsatz. Viele Hochschulen nutzen NFC-Chips in Studentenausweisen zur Zahlung kleinerer Beträge. Einige Kreditkarten haben eine kontaktlose Bezahlfunktion, die z.B. bei Beträgen bis zu 50 €, Zahlungen ohne Eingabe einer PIN ermöglicht. Weitere Anwendungen sind beispielsweise die Übertragung von Bluetooth oder WLAN-Authentifizierungsdaten zum Aufbau einer Kommunikation, oder das Aufrufen von Weblinks wenn im NFC-Chip eine URL im entsprechenden Format hinterlegt wurde, vgl. https://de.wikipedia.orq/wiki/Near Field Communication.

Lediglich der Vollständigkeitshalber wird darauf hingewiesen, dass vorliegend vorgesehen ist, dass seitens des Servicetechnikers lediglich Daten ausgelesen werden können, d.h. ein Schreibzugriff seitens eines Servicetechnikers oder dergleichen, auf das NFC-Tag ist nicht möglich.

Erfindungsgemäß ist zudem vorgesehen, dass sich bei dem Datenbus um einen I2C-Datenbus handelt, über den das CoM als Master mit dem Carriercontroller und dem NFC-Tag kommuniziert, d.h. dass im "Normalfall" das NFC-Tag vom CoM beschrieben wird, und dass im Falle eines defekten CoMs, nachfolgend als "Fehlerfall" bezeichnet, der Carriercontroller die Masterposition übernimmt und dieser veranlasst, dass entsprechende Fehlermeldungen auf das NFC-Tag geschrieben werden. D.h. im "Fehlerfall" wird das NFC-Tag vom Carriercontroller beschrieben. Dieser Ausgestaltung erweist sich als besonders vorteilhaft, da nunmehr auch bei Ausfall des CoMs ein Protokollieren von Fehlermeldungen auf das NFC-Tag sichergestellt ist, und diese dann entsprechend auch von einem Servicemitarbeiter kontaktlos ausgelesen werden können.

Gemäß einer bevorzugten Ausführungsform der erfindungsgemäßen Steuereinheit ist vorgesehen, dass die Steuereinheit ferner ein Modulboard umfasst, auf dem sonstige, firmenspezifische Komponenten und/oder Module, wie z.B. ein speziell entwickeltes Hardware-Security-Modul und/oder ein firmenspezifisches Datenbankmodul, sowie Schnittstellen ausgelagert ist/sind. Diese Ausgestaltung hat den Effekt, dass ohne eine kostenintensive Änderung des Carrierboards, auch eine Implementierung spezieller firmenspezifischer Komponenten und Module ermöglicht ist.

Zum Anschluss des Connectorboards und/oder des Datenbankboards, weist das Carrierboard eine entsprechende Schnittstelle auf. Diese Schnittstelle ist bevorzugt als eine Kombischnittstelle ausgebildet. Der Begriff Kombischnittstelle ist dabei so zu verstehen, dass es sich hierbei um eine einheitliche Schnittstelle für alle Connectorboards handelt, die verschiedene Signal, Spannungsversorgungen und I/Os beinhaltet.

Vorzugsweise ist dabei die Kombischnittstelle so ausgebildet, dass diese zwei USB-, acht UART-Anschlüsse, einen I2C-Datenbus, Spannungsversorgungen für 12V, 5V und 3,3 V sowie diverse I/Os zur Gerätesteuerung aufweist.

Lediglich der Vollständigkeit halber wird darauf hingewiesen, dass unter den oben verwendeten Abkürzungen, nämlich
USB = Universal Serial Bus 2.0 oder höher
UART = Asynchronous Receiver Transmitter
zu verstehen ist.

Eine besonders vorteilhafte Weiterbildung der Erfindung zeichnet sich dadurch aus, dass das Carrierboard einen Carriercontroller umfasst, der eingerichtet ist, die Lüfterdrehzahlen, Temperatur (Umgebungstemperatur) und/oder Spannungen der Schaltregler, zu überwachen und zu protokollieren. D.h., das Carrierboard weist ein Bauteil, nämlich den Carriercontroller, auf, das die "Gesundheit" der Steuereinheit überwacht und den überwachten Zustand protokolliert. Hierdurch ist in besonders vorteilhafter Weise bei Wartungsarbeiten und/oder im Falle eines Defektes durch Auslesen der protokollierten Daten eine vereinfachte Fehleranalyse ermöglicht:
Sind z.B. die überwachten Spannungen in Ordnung, veranlasst der Carriercontroller das die jeweiligen RGBs auf "grün" geschaltet werden, bzw. - falls die Spannungen nicht in Ordnung sind - das die jeweiligen RGBs auf "rot" geschaltet, das CoM im Reset gehalten und/oder eine Fehlermeldung generiert werden/wird. D.h. es ist in vorteilhafter Weise nunmehr einem Techniker oder der Fertigung ein vereinfachtes Fehlermanagement zur Verfügung gestellt.

Die Anordnung des NFC-Tags kann dabei den entsprechenden Gegebenheiten angepasst werden: so ist es denkbar, dass das NFC-Tag auf einer separaten NFC-Tag-Trägerplatine angeordnet ist und über den I2C-Datenbus mit dem CoM und dem Carriercontroller kommunizierend verbunden ist. Alternativ ist es auch denkbar, dass das NFC-Tag auf dem Connectorboard oder dem Modulboard angeordnet ist und über die Kombischnittstelle und dem I2C-Datenbus mit dem CoM und dem Carriercontroller kommunizierend verbunden ist.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine schematische Ansicht einer ersten Ausführungsform einer Steuereinheit für einen Unterhaltungsautomaten;
- Fig. 2: eine zweite Ausführungsform einer Steuereinheit für einen Unterhaltungsautomaten in einer schematischen Ansicht, und
- Fig. 3: eine weitere Ausführungsform einer Steuereinheit in schematischer Darstellung.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

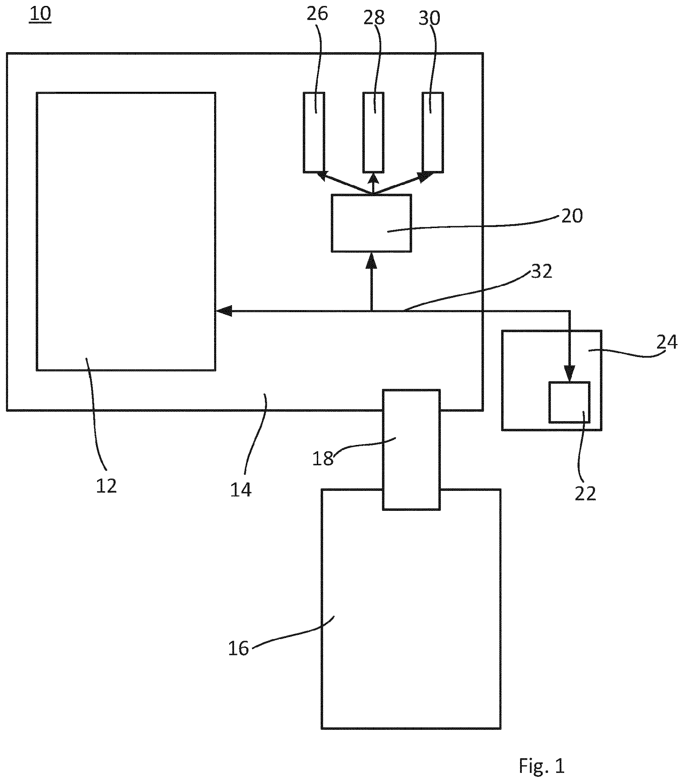

Fig. 1 zeigt eine, insgesamt mit der Bezugsziffer 10 bezeichnete Steuereinheit für einen Unterhaltungsautomaten.

Wie Fig. 1 weiter zu entnehmen ist, weist die Steuereinheit 10 einen modularen Aufbau auf und umfasst im Wesentlichen ein Computer-on-Modul 12, ein das Computer-on-Modul 12 tragendes Carrierboard 14 sowie ein - in Bezug zum Carrierboard 14 als separates Bauteil ausgebildetes - Connectorboard 16.

Dabei sind alle relevanten Funktionseinheiten, wie Zentraleinheit (CPU), Arbeitsspeicher und Chipsatz, auf dem auf dem Computer-on-Modul 12 angeordnet, während das das Computer-on-Modul 12 tragende Carrierboard 14 und das Connectorboard 16 vorliegend so ausgebildet bzw. konfiguriert sind, dass sich auf dem Carrierboard 14 lediglich die für den Betrieb eines Unterhaltungsautomaten unbedingt notwendigen sonstigen Bauteile, z.B. Spannungsversorgung, physikalische Schnittstellen zum Anschluss von Ein- und Ausgabegeräten etc., befinden und alle sonstigen, nämlich die einen Unterhaltungsautomatentyp und dessen gedachten Einsatz spezifizierenden Bauteile, also die automaten-, anwendungs- und länderspezifischen Komponenten und Schnittstellen, auf dem Connectorboard 16 angeordnet bzw. auf dieses ausgelagert sind.

Über eine Kombischnittstelle 18 sind das Computer-on-Modul 12 und das Connectorboard 16 kommunizierend miteinander verbunden.

Durch den modularen Aufbau der Steuereinheit 10, und hier insbesondere die Auslagerung der automaten-, anwendungs- und länderspezifischen Komponenten und Schnittstellen auf das Connectorboard 16, ist nunmehr gewährleistet, dass nur noch eine "Bestückungsvariante" des Carrierboards 14 vorgehalten wird. Aufgrund des damit verbundenen geringeren Verwaltungsaufwands und der geringeren Artikelpflege ist damit eine erhebliche Kostenersparnis verbunden. Da zudem das Carrierboard 14 aufgrund der erfindungsgemäßen Auslagerung der automaten-, anwendungs- und länderspezifischen Komponenten und Schnittstellen auf das Connectorboard 16 in Bezug auf seine Fläche kleiner ausgebildet werden kann, ist auch das Carrierboard 14 in der Herstellung bzw. Beschaffung kostengünstiger, was wiederum zu einer erheblichen Kostenersparnis beiträgt.

Ein weiterer Vorteil des modularen Aufbaus der Steuereinheit 10 ist, dass durch die Wahl bzw. Einbaus eines diesbezüglich konfigurierten Connectorboards 16, die Steuereinheit 10 aufwandsarm, d.h. insbesondere schnell und kostengünstig an unterschiedliche Anforderungen, wie z.B. Einsatz im Ausland etc., angepasst werden kann.

Wie Fig. 1 weiter zu entnehmen ist, umfasst die Steuereinheit 10 ferner einen mit der Bezugsziffer 20 bezeichneten, auf dem Carrierboard 14 angeordneten Carriercontroller sowie ein NFC-Tag 22. Gemäß der in Fig. 1 dargestellten Ausführungsform ist dabei das NFC-Tag 22 auf einer in Bezug zum Carrierboard 14 separaten NFC-Tag-Trägerplatine 24 angeordnet.

Der Carriercontroller 20 ist dabei eingerichtet Lüfter, Temperatur und Spannungen zu überwachen und zu protokollieren. Die Lüfter-, Temperatur- und Spannungsüberwachung ist in Fig. 1 durch Bezugszeichen 26, 28 und 30 sowie die vom Carriercontroller 20 ausgehenden Pfeile symbolisiert.

Zudem sind - wie Fig. 1 weiter zeigt - das Computer-on-Modul 12, der Carriercontroller 20 und das NFC-Tag 22 über einen I2C-Datenbus 32 kommunizierend miteinander verbunden. Während im "Normalfall" das Computer-on-Modul 12 die Masterposition hat, und entsprechend das Speichern der protokollierten Daten auf das NFC-Tag 22 veranlasst, übernimmt im Falle eines Defektes des Computer-on-Moduls 12 der Carriercontroller 20 die Masterposition und veranlasst das Beschreiben des NFC-Tags 22.

Das Vorsehen des Carriercontrollers 20, des NFC-Tags 22 sowie die kommunizierende Verbindung über den I2C-Datenbus 32 erweist sich als besonders vorteilhaft, da zum einen Fehler auf eine einfache Weise kontaktlos ausgelesen werden können und zum anderen auch bei Ausfall des Computer-on-Moduls 12 ein Protokollieren und Auslesen von Fehlermeldungen sichergestellt ist. Somit ist ein verbessertes Fehlermanagement ermöglicht.

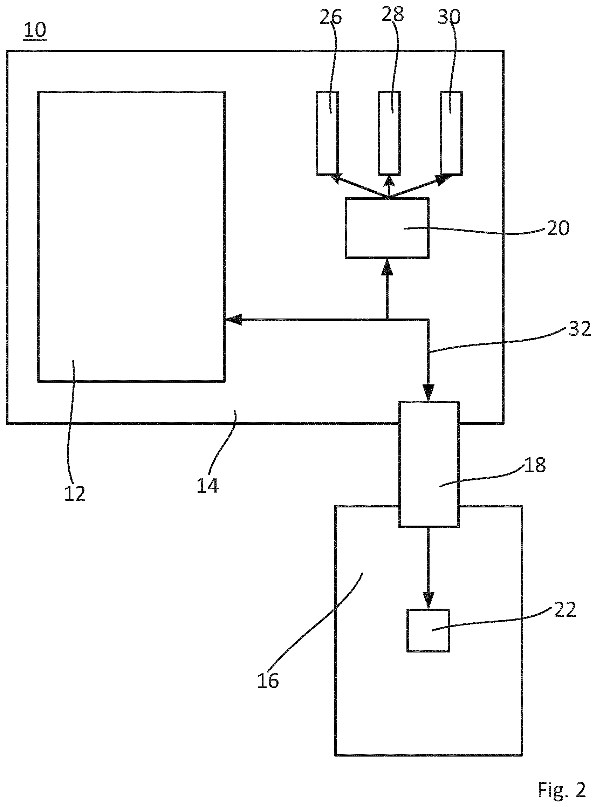

Die in Fig. 2 dargestellte zweite Ausführungsform entspricht im Wesentlichen der in Fig. 1 dargestellten ersten Ausführungsform: Gemäß der zweiten Ausführungsform ist jedoch das NFC-Tag 22 auf dem Connectorboard 16 angeordnet.

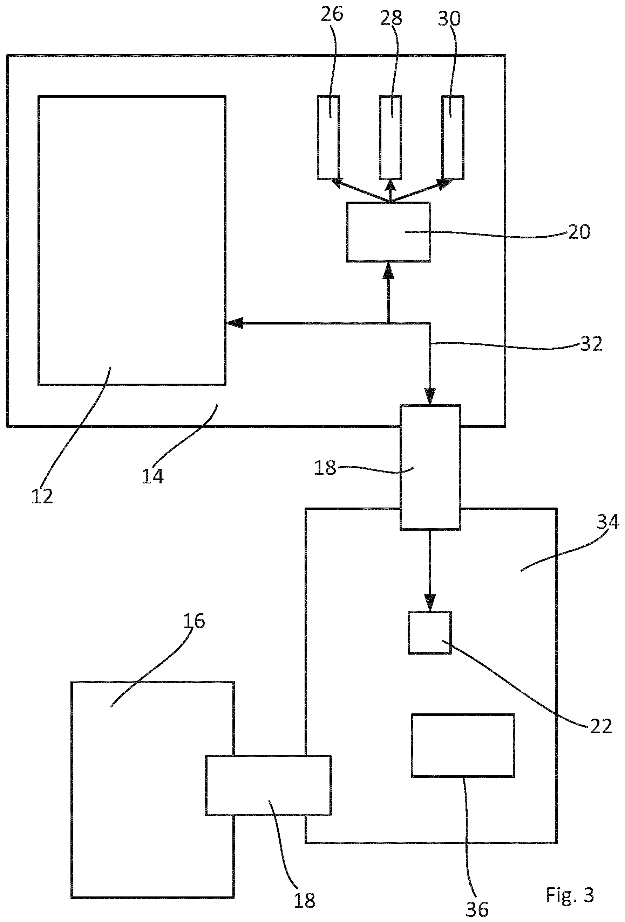

Die Fig. 3 dargestellte Ausführungsform zeichnet sich dadurch aus, dass die Steuereinheit 10 ferner ein Modulboard 34 umfasst, auf dem firmenspezifische Komponenten und/oder Module sowie Schnittstellen ausgelagert sind. Vorliegend umfasst das Modulboard 34 ein mit der Bezugsziffer 36 bezeichnetes Hardware-Security-Modul. Zudem ist - wie Fig. 3 weiter zeigt - das NFC-Tag 22 auf dem Modulboard 34 angeordnet.

### Bezugszeichenliste

- 10: Steuereinheit
- 12: Computer-on-Modul
- 14: Carrierboard
- 16: Connectorboard
- 18: Kombischnittstelle
- 20: Carriercontroller
- 22: NFC-Tag
- 24: NFC-Tag-Trägerplatine
- 26: Lüfterüberwachung
- 28: Temperaturüberwachung
- 30: Spannungsüberwachung
- 32: I2C-Datenbus
- 34: Modulboard
- 36: Hardware-Security-Modul

## Patentansprüche

1. Steuereinheit (10) für einen Unterhaltungsautomaten, wobei die Steuereinheit (10) ein Computer-on-Modul (12), ein das Computer-on-Modul (12) tragendes Carrierboard (14), sowie ein Connectorboard (16) umfasst, wobei die für den Betrieb eines Unterhaltungsautomaten notwendigen Komponenten und Schnittstellen auf dem Computer-on-Modul (12) und dem Carrierboard (14) angeordnet sind und alle weiteren anwendungs-, automaten-, und/oder länderspezifische Komponenten und Schnittstellen auf das Connectorboard (16) ausgelagert sind, **dadurch gekennzeichnet, dass** die Steuereinheit (10) ferner ein NFC-Tag (22) aufweist, das über einen Datenbus mit dem Computer-on-Modul (12) kommuniziert und das eingerichtet ist mit Daten beschrieben zu werden und dass es sich bei dem Datenbus um einen I2C-Datenbus (30) handelt, über den das Computer-on-Modul (12) als Master mit dem Carriercontroller (20) und dem NFC-Tag (22) kommuniziert, und dass bei Ausfall des Computer-on-Moduls (12) der Carriercontroller (20) die Masterposition übernimmt und dieser veranlasst, dass Fehlermeldungen auf das NFC-Tag (22) geschrieben werden.

2. Steuereinheit (10) nach Anspruch 1, **dadurch gekennzeichnet, dass** die Steuereinheit (10) ferner ein Modulboard (34) umfasst, auf dem firmenspezifische Komponenten und/oder Module ausgelagert sind.

3. Steuereinheit (10) nach Anspruch 1 oder 2, **dadurch gekennzeichnet, dass** das Carrierboard (14) eine Kombischnittstelle (18) zum Anschluss des Connectorboards (16) und/oder Modulboards (34) aufweist.

4. Steuereinheit (10) nach Anspruch 3, **dadurch gekennzeichnet, dass** die Kombischnittstelle (18) zumindest zwei USB-, acht UART-Anschlüsse, einen I2C-Datenbus, Spannungsversorgungen für 12V, 5V und 3,3 V sowie diverse I/Os zur Gerätesteuerung aufweisend ausgebildet ist.

5. Steuereinheit (10) nach einem der vorgenannten Ansprüche, **dadurch gekennzeichnet, dass** das Carrierboard (14) einen Carriercontroller (20) umfasst, der eingerichtet ist Lüfter, Temperatur und/oder Spannungen (24, 26, 28) zu überwachen und zu protokollieren.

6. Steuereinheit (10) nach Anspruch 1, **dadurch gekennzeichnet, dass** das NFC-Tag (22) auf einer separaten NFC-Tag-Trägerplatine (24) angeordnet ist.

7. Steuereinheit (10) nach Anspruch 1, **dadurch gekennzeichnet, dass** das NFC-Tag (22) auf dem Connectorboard (16) angeordnet ist.

8. Steuereinheit (10) nach Anspruch 1, **dadurch gekennzeichnet, dass** das NFC-Tag (22) auf dem Modulboard (34) angeordnet ist.

## Claims

1. Control unit (10) for an entertainment machine, the control unit (10) comprising a computer-on module (12), a carrier board (14) having the computer-on module (12) mounted thereon, and a connector board (16), with those components and interfaces as are required for the operation of an entertainment machine being arranged on the computer-on module (12) and the carrier board (14), and any additional application-specific, machine-specific and/or country-specific components and interfaces being located on the connector board (16), **characterized in that** the control unit (10) also has an NFC tag (22), which communicates with the computer-on module (12) via a data bus and which is adapted to be written with data, and **in that** the data bus is an I2C data bus (30), via which the computer-on module (12) communicates as the master with the carrier controller (20) and the NFC tag (22), and **in that**, in the event of failure of the computer-on module (12), the carrier controller (20) takes over the master function and causes error messages to be written to the NFC tag (22).

2. Control unit (10) according to claim 1, **characterized in that** the control unit (10) further comprises a module board (34), on which company-specific components and/or modules are located.

3. Control unit according to any one of claims 1 or 2 above, **characterized in that** the carrier board (14) has a combo interface (18) for connecting the connector board (16) and/or module board (34).

4. Control unit (10) according to claim 3, **characterized in that** the combo interface (18) is designed to have at least two USB ports, eight UART ports, an I2C data bus, power supplies for 12 V, 5 V and 3.3 V and various I/Os for device control.

5. Control unit (10) according to any one of the preceding claims, **characterized in that** the carrier board (14) comprises a carrier controller (20) which is adapted to monitor and log fans, temperatures and/or voltages (24, 26, 28).

6. Control unit (10) according to claim 1, **characterized in that** the NFC tag (22) is located on a separate NFC tag carrier board (24).

7. Control unit (10) according to claim 1, **characterized in that** the NFC tag (22) is located on the connector board (16).

8. Control valve (10) according to claim 1, **characterized in that** the NFC tag (22) is located on the module board (34).

## Revendications

1. Unité de commande (10) pour un automate de divertissement, dans laquelle l'unité de commande (10) comprend un module-sur-ordinateur (12), une carte support (14) portant le module-sur-ordinateur (12) ainsi qu'une carte connecteur (16), dans laquelle les composantes et interfaces nécessaires au fonctionnement d'un automate de divertissement sont agencées sur le module-sur-ordinateur (12) et la carte support (14), et toutes les autres composantes et interfaces d'application, d'automate et/ou spécifiques à un pays sont externalisées sur la carte connecteur (16), **caractérisée en ce que** l'unité de commande (10) présente en outre une étiquette-NFC (22) qui communique avec le module-sur-ordinateur (12) via un bus de données et qui est configurée pour être écrite avec des données et **en ce que** le bus de données est un bus de données I2C (30), via lequel le module-sur-ordinateur (12) en tant que maître communique avec le contrôleur de support (20) et l'étiquette-NFC (22), et **en ce qu'**en cas de défaillance du module-sur-ordinateur (12) le contrôleur de support (20) reprend la position de maître et celui-ci fait en sorte que des messages d'erreur soient écrits sur l'étiquette-NFC (22).

2. Unité de commande (10) selon la revendication 1, **caractérisée en ce que** l'unité de commande (10) comprend en outre une carte module (34) sur laquelle sont externalisés des composantes et/ou modules spécifiques à une société.

3. Unité de commande (10) selon la revendication 1 ou 2, **caractérisée en ce que** la carte support (14) présente une interface combinée (18) pour un raccordement de la carte connecteur (16) et/ou de la carte module (34).

4. Unité de commande (10) selon la revendication 3, **caractérisée en ce que** l'interface combinée (18) est conçue de façon à présenter au moins deux raccordements USB, huit raccordements UART, un bus de données I2C, des alimentations pour 12 V, 5 V et 3,3 V, ainsi que diverses entrées/sorties pour le pilotage d'appareil.

5. Unité de commande (10) selon l'une des revendications précédentes, **caractérisée en ce que** la carte support (14) comprend un contrôleur de support (20) qui est configuré pour surveiller et relever une aération, une température et/ou des tensions (24, 26, 28).

6. Unité de commande (10) selon la revendication 1, **caractérisée en ce que** l'étiquette-NFC (22) est agencée sur une platine de support d'étiquette-NFC (24) séparée.

7. Unité de commande (10) selon la revendication 1, **caractérisée en ce que** l'étiquette-NFC (22) est agencée sur la carte connecteur (16).

8. Unité de commande (10) selon la revendication 1, **caractérisée en ce que** l'étiquette-NFC (22) est agencée sur la carte module (34).
